# EUROPEAN PATENT SPECIFICATION

(11) **EP 4 136 864 B1**
(45) Date of publication and mention of the grant of the patent: **02.09.2026**
(21) Application number: 20720422.3
(22) Date of filing: 17.04.2020
(51) Int. Cl.: H04W 4/46

(54) **APPARATUS, METHOD AND COMPUTER PROGRAM FOR STABLE AND SAFE VEHICLE PLATOONING OPERATIONS**
VORRICHTUNG, VERFAHREN UND COMPUTERPROGRAMM FÜR STABILE UND SICHERE FAHRZEUGKOLONNENOPERATIONEN
APPAREIL, PROCÉDÉ ET PROGRAMME INFORMATIQUE POUR OPÉRATIONS DE CIRCULATION EN PELOTON DE VÉHICULES STABLES ET SÛRES

(43) Date of publication of application: 22.02.2023
(73) Proprietor: Nokia Solutions and Networks Oy, 02610 Espoo (FI)
(72) Inventor: HEGDE, Sudeep, 70376 Stuttgart (DE); BLUME, Oliver, 70499 Stuttgart (DE); SHRIVASTAVA, Rudraksh, 74391 Erligheim (DE)
(74) Representative: Mudge, Kevin
(86) International application number: PCT/EP2020/060887
(87) International publication number: WO 2021/209156

(56) References cited:
- MEI JIE ET AL: "Joint Radio Resource Allocation and Control for Vehicle Platooning in LTE-V2V Network", IEEE TRANSACTIONS ON VEHICULAR TECHNOLOGY, IEEE SERVICE CENTER, PISCATAWAY, NJ, US, vol. 67, no. 12, 1 December 2018 (2018-12-01), pages 12218 - 12230, XP011700309, ISSN: 0018-9545, [retrieved on 20181214], DOI: 10.1109/TVT.2018.2874722
- PEDRO FERNANDES ET AL: "Platooning With IVC-Enabled Autonomous Vehicles: Strategies to Mitigate Communication Delays, Improve Safety and Traffic Flow", IEEE TRANSACTIONS ON INTELLIGENT TRANSPORTATION SYSTEMS, IEEE, PISCATAWAY, NJ, USA, vol. 13, no. 1, 1 March 2012 (2012-03-01), pages 91 - 106, XP011427549, ISSN: 1524-9050, DOI: 10.1109/TITS.2011.2179936

## Description

### Field

This disclosure relates to wireless communications. Some examples relate to communications between vehicles.

### Background

Vehicles may travel in a group to reduce drag and increase road throughput. Such a group may comprise a Platoon or an ad-hoc group of vehicles. A Platoon may comprise a Platoon Leader (PL) and at least one Platoon Member (PM).

Article Joint Radio Resource Allocation and Control for Vehicle Platooning in LTE-V2V Network' (IEEE TRANSACTIONS ON VEHICULAR TECHNOLOGY, VOL. 67, NO. 12, DECEMBER 2018, page 12218) describes vehicle platooning where cooperative awareness messages are exchanged between vehicles in a platoon.

### Summary

In accordance with the present invention, there is provided apparatus as claimed in the accompanying claims.

### Brief description of Figures

Illustrative embodiments providing improved techniques will now be described in further detail, by way of example only, with reference to the following examples and accompanying drawings, in which:
Figure 1A shows an example representation of a group of vehicles;
Figure 1B shows an example representation of a group of vehicles;
Figure 2 shows a schematic representation of a message flow in a network;
Figure 3 shows schematic representation of a message flow in a network;
Figure 4 shows schematic representation of an apparatus according to an example;
Figure 5 shows schematic representation of an apparatus according to an example;
Figure 6 shows a flow chart of a method; and
Figure 7 shows a flow chart of a method.

### Detailed description

The present disclosure relates to wireless communications. Some examples relate to Vehicle-to-Everything (V2X) communications.

Vehicle Platooning is a use case of Vehicle-to-Everything (V2X) communications. In vehicle Platooning, vehicles may drive on the road in a coordinated and cooperative manner to maintain short inter-vehicle-distances (IVD) and also to maintain high speeds.

During Vehicle Platooning, Platoons (groups) of vehicles (e.g. cars, trucks, bikes etc.) equipped with automated driving technology could be used to increase the road throughput. Further, platoons of vehicles may be used to save fuel due to reduced air drag.

Platoons include a Platoon Leader (PL) which hosts some control functions of the Platoon and at least one Platoon Member (PM), which follow each other at close distances. The PL is generally the first vehicle in the Platoon, but it is possible to have it anywhere in the Platoon. In some examples, the PL function could be hosted in a network, which provides the PMs with control signals to assist autonomous driving. Or a hybrid approach can be used with a distribution of the PL function partially on network and partially on PL. Although reference below is mainly made towards a situation where PL function is hosted by a vehicle in the platoon, it should be appreciated that the PL function could be hosted in a network and not in a vehicle of the platoon.

To maintain short IVDs, PMs make use of on-board sensors (for example, RADAR/LIDAR sensors). On-board sensors are usually limited to picking up information between only two consecutive vehicles of a platoon. When using on-board sensors alone, indications of Platoon speed, acceleration, change of direction and adaptions of IVDs have to propagate hop by hop, which limits the performance of the Platoon. This can lead to delay, oscillations of distances between vehicles. To mitigate this larger security gaps are required between vehicles to account for the hop by hop propagation than when inter-vehicle wireless communications are used.

For high performance Platoons, vehicles in a Platoon can use inter-vehicle wireless communications (as well as, or instead of, on-board sensor measurements) to share the manoeuvre and awareness information of the vehicle to other PMs, such that the each PM is be able to react to movements made by PMs (or the PL) in front.

In some examples, the PM at the front of the Platoon can provide the required acceleration/braking that needs to be applied by all following Platoon Members. By using inter-vehicle wireless communications, shorter IVDs can be maintained when compared to using on-board sensors alone.

It has been shown in M. Ochocki, V. Vukadinovic, M. Januszewski and I. de la Iglesia, "Demo: Communication requirements of CACC for high-density platooning," 2016 IEEE Vehicular Networking Conference (VNC), Columbus, OH, 2016, pp. 1-2 that small IVDs are achievable. M. Sybis et al., "Communication Aspects of a Modified Cooperative Adaptive Cruise Control Algorithm," in IEEE Transactions on Intelligent Transportation Systems, vol. 20, no. 12, pp. 4513-4523, Dec. 2019 also shows an example of achievable small IVDs.

Algorithms for controlling a platoon may maintain a distance or a lead time (time headway) between vehicles. Algorithms for controlling a platoon may be implemented using on-board sensors for vehicles in the platoon. Algorithms for controlling a platoon may be implemented using exchange of intra-platoon messages via unicast transmissions, broadcast and/or groupcast transmissions.

When using an algorithm for controlling a platoon that maintains a lead time (time headway) between vehicles, platoons can be realized with a Constant-Time-Headway (CTH) controller, where each PM maintains a time headway to the PM in front of it (frontPM or fPM). The IVD with this controller is speed dependant and is therefore dynamic. The IVD is increased when traveling at high speeds and it is lowered at low speeds. CTH controllers can stably operate a platoon ("string stable" without build-up of distance errors) by radar sensors or by intra-Platoon communications only between Platoon member pairs (front PM to PM behind it in the Platoon). When using CTH controllers a control algorithm in the PM derives its acceleration from the actual radar measured distance and potentially from additional parameters like its own speed and the speed and acceleration received from the fPM. Each PM therefore requires fPM messages to compute the required acceleration to maintain the Time-Headway. However, it may not be clear to the other PMs whether the other PMs are in a 'good' radio state while computing their required accelerations.

When using an algorithm for controlling a platoon that maintains a distance between vehicles, platoons can also be realized with a Constant-Distance (CD) controller, where the same target IVD is maintained irrespective of Platoon Speed. It has been shown by control theory [see for example, R. Rajamani, S. Choi, B. Law, J.K. Hedrick, R. Prohaska and P. Kretz, "Design and experimental implementation of longitudinal control for a platoon of automated vehicles," Journal of Dynamic Systems, Measurement, and Control, vol. 122, no. 3, 2000, which describes algorithms for the control of a platoon] that for stability a CD controller requires additional Platoon Signalling when compared with a CTH controller. When using a CD controller, each Platoon Member requires Platoon Control messages from the PM at the front of the Platoon (which in some examples is the PL), and the PM directly preceding it (as in CTH).

An example wireless access technology for intra-Platoon wireless communications is Dedicated Short Range Communications (DSRC) based on IEEE 802.11p which can be used for direct vehicle-to-vehicle communications with and without assistance from Road-Side-Units (RSUs).

A further examples wireless access technology for intra-Platoon wireless communications is Cellular Vehicle-to-Everything communications, which is based on 3GPP technologies which can facilitate direct communications between Platoon Members with Device-to-Device (D2D) communications or through classical cellular communications (Uplink (UL) and Downlink (DL)).

To provide stable and safe Platooning operations, high reliability and low latency provided by the wireless access technology is preferred. However, due to the inherent nature of wireless channels and the high-speed mobility of Platoons, Platoons will suffer from lost packets. Some examples provide a mechanism/signalling framework to indicate, from a first Platoon Member to the other Platoon Members, information about the reception state of the first Platoon Member so that the other Platoon Members can be aware of the accuracy of the information to use in the computation of manoeuvre.

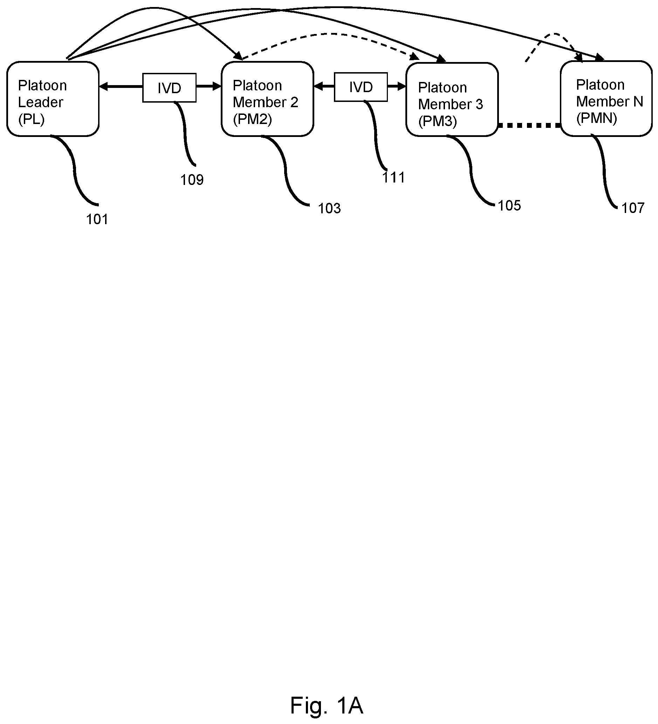

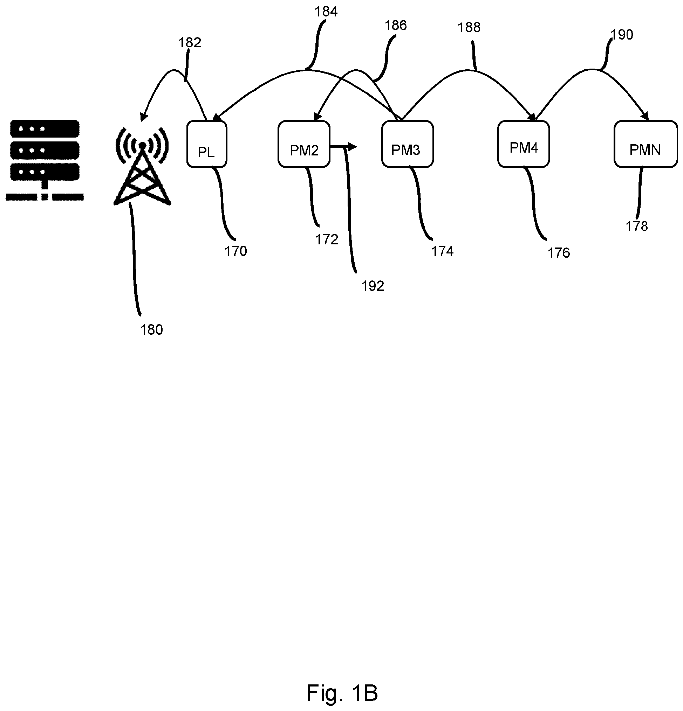

An example platoon is shown in Figure 1. In the example of Figure 1, the platoon comprises N vehicles. The PL function is hosted in a vehicle at PL 101, which in the example of Figure 1 is at the front of the platoon. PL 101 has a separation distance of IVD 109 from platoon member 2 (PM2) 103. PM2 103 has a separation distance of IVD 111 from PM3 105. The Nth PM is PMN 107, which is shown at the rear of the platoon.

In the example of Figure 1, PL messages (messages sent from the PL comprising movement information from the PL) are shown by solid arrows, and front PM (fPM) (messages sent from the fPM comprising movement information from the fPM) messages are shown by dashed arrows. Movement information may comprise, for example, acceleration, velocity and/or displacement of the PM or PL sending the movement information.

Each PM (including the PL 101) of Figure 1 can be equipped with radio transceivers for sending and receiving messages and with sensors to measure the distance between itself and the PM in front (i.e to measure the IVD with the PM in front). When using measured distances only, the hop-by-hop propagation of a change in speed can lead to instabilities and oscillations and limits the minimum IVD that can be safely implemented in the platoon. When PMs also receive wirelessly transmitted information (e.g. actual speed and acceleration or other information about its manoeuvres like change of direction) from the fPM in front and from the Platoon Leader (PL), the PMs can prepare to break earlier and therefore can safely maintain a shorter constant IVD.

If one of the PMs in the middle of the Platoon (e.g. PM2 103 in the figure) loses Platoon control messages due to the inherently lossy wireless transmissions from either the PL or fPM immediately in front of the PM, the computed acceleration by the next Platoon Member (PM3 105) will not be accurate. For example, PM3 105 may calculate (using the weighted terms in the CD formula) different braking or acceleration actions then intended by the platoon leader (PL 101) and expected by the following platoon member. PM3 105, in turn, indicates the inaccurately computed manoeuvre information to the PM (PM4, not shown in Figure 1) behind it. In a case such as this, a PM which is traveling behind another PM suffering from poor radio conditions might receive conflicting control messages from the PL and the fPM. This may result in Platoon control errors propagating through the Platoon, even when most links between the Platoon Members are functional. This problem may be dangerous and require a larger IVD to be safe. However, this larger IVD limits the fuel saving and road utilisation gains afforded by the use of a Platoon.

An example of a CD algorithm for a platoon using a CD algorithm is shown below in Equation 1. For each PMᵢ (i.e. the ith PM), the algorithm successively computes the acceleration that will be applied for the next time step. The computation is based on the current acceleration, speed and distance of PMᵢ, the PL and the preceding car (the fPM, i.e. PMᵢ₋₁). In some examples, it is assumed that all PMs use the same algorithm.

With this Constant-Distance controller, each PM in the Platoon requires messages from PL and the front PM at short intervals of time. In this process, each PM combines the information from PL and fPM, to compute the required acceleration to maintain the constant distance. The acceleration is computed from the acceleration, speed and distance readings using the following CD algorithm (Equation 1): $\begin{matrix}{{x}^{¨}}_{i _ des} = \left(1-{C}_{1}\right) {{x}^{¨}}_{i - 1} + {C}_{1} {{x}^{¨}}_{l} - \left(2ξ-{C}_{1}\left(ξ+\sqrt{{ξ}^{2} - 1}\right)\right) {ω}_{n} {\dot{ε}}_{i} \\ - \left(ξ+\sqrt{{ξ}^{2} - 1}\right) {ω}_{n} {C}_{1} \left({v}_{i}-{v}_{l}\right) - {ω}_{n} ε i 2\end{matrix}$ where, *ẍ* is acceleration, *ε* and *ε̇* are the position error and its derivative, *C₁* is a tuning parameter for the weight of PL vs. fPM acceleration, ξ is a damping parameter of speed differences, v is velocity and *ω* is the controller bandwidth. Values with a subscript of "i_des" are values for PMᵢ, values with a subscript of "i-1" are values for PMᵢ₋₁ (the fPM) and values with a subscript of "L" are values for the PL. This equation is further discussed in R. Rajamani, S. Choi, B. Law, J.K. Hedrick, R. Prohaska and P. Kretz, "Design and experimental implementation of longitudinal control for a platoon of automated vehicles," Journal of Dynamic Systems, Measurement, and Control, vol. 122, no. 3, 2000.

It can be seen from Equation 1 that the ith Platoon Member combines the PL and fPM information by using different weights applied to respective messages. In other words, different weights may be applied to movement information of the PL and fPM. The required information from the PL and the fPM are their current/predicted speed and acceleration, such that the ith PM can compute the desired acceleration for the next time step. In some CD controllers, equal weights are assigned to PL and fPM information when computing the desired acceleration using equations such as Equation 1. In this case, C₁ is set to 0.5 and the same weighting is used for PL and fPM information under the assumption that the wirelessly transmitted Platoon information is always available. In these examples, it is assumed that the none of the PL of fPM information is missing (e.g. due to packet losses). However, if the ith PM missed one or more messages and uses outdated information from previous transmissions, an undesired acceleration output may be given for the ith PM. As such, packet loss due to issues such as handovers and interference could cause, particularly during long intervals of successive packet losses, the Constant-Distance algorithm to lead to platoon crashes.

In the example of Figure 1, an example where PL 101 detects an obstacle and applies the brakes can be considered. In this example, PL 101 may then issue a braking command or send a message with its movement information (in this case a deceleration), to be used by the one or more CD controllers of all PMs. In the following the term command is used for instructions or for values describing the movement, like acceleration, speed, position or direction.

At PM2 103, if due to various reasons, the braking command is not successfully received, this can lead to a scenario where PM2 103 computes an inaccurate desired acceleration, due to unavailability of the PL command. In this case, PM2 103 may continue to use the old PL command from the last received message until another message is received from the PL. If the latest received PL message is an acceleration command, PM2 103 might continue to accelerate when PM2 103 should instead be braking.

At PM2 103, if due to various reasons, the braking command is not successfully received, this can also lead to a situation where PM2 103 provides an inaccurately computed acceleration/braking value to PM3 105 behind PM2 103. Since PM3 105 receives the fPM message (from PM2 103), it may trust this information provided by the fPM and uses it in the computation of manoeuvres for PM3 105. The contributions from PL 101 and the erroneous contribution from PM2 103 may then be weighted in the computation of the acceleration for PM3 105. In addition, if PM3 105 has also lost messages from PL 101, PM3 105 may continue to use the latest available message from the PL 101.

At PM_{N} 107, if one or more fPM messages (from PM_{N-1}) are not received, PM_{N} 107 may not react quickly to the manoeuvre of PM_{N-1}. In this case, PM_{N} 107 continues to use latest available PM_{N-1} command. The distance between PM_{N} 107 and PM_{N-1} will then deviate from the intended distance. When the distance error builds up, the according distance term in Equation 1 will slowly start to correct the computed acceleration, but this may be too late for safe operation.

In a situation where PM_{N} 107 has successful reception from PL 101 and its fPM (PM_{N-1}), but the fPM has inaccurately computed the target acceleration due to lost commands from PL 101 and/or PM_{N-2}, PM_{N} 107 may have conflicting information giving directions to brake or accelerate from the two messages (the fPM message and the PL message) that PM_{N} 107 may be using in a CD controller. The weighted input into Equation 1 for PM_{N} 107 will deviate from the intended acceleration in Equation 1, e.g. PM_{N} 107 might follow the beginning acceleration of PL 101 while PM_{N-1} continues to cruise. The contribution of the term for the PL 101 acceleration will result in a higher acceleration of PM_{N} 107 than of PM_{N-1} and yield a decreasing distance between PM_{N} 107 and PM_{N-1}. In some cases, this may lead to a suboptimal and/or unsafe Platooning operation.

When a PM is using Constant-Distance algorithm such as Equation 1, the algorithm may act stably when messages are received from the PL and messages are received from the fPM. A constant distance can be maintained between the PM and fPM.

When a PM is using Constant-Distance algorithm such as Equation 1, the algorithm may have low stability when messages are not received from the PL and messages are received from the fPM. In this case there may be variation from the desired constant distance between the PM and fPM.

When a PM is using Constant-Distance algorithm such as Equation 1, the algorithm may have no stability when messages are received from the PL and messages are not received from the fPM. In this case there may be variation from the desired constant distance between the PM and fPM.

When a PM is using Constant-Distance algorithm such as Equation 1, the algorithm may have no stability when messages are not received from the PL and messages are not received from the fPM. In this case there may be variation from the desired constant distance between the PM and fPM.

As well as depending on message reception of a PM, Platoon performance also depends on whether an fPM has good reception of wireless transmissions sent from the PL and the PM preceding the fPM. Taking PM_{N} as an example, the performance of a constant distance algorithm depends on whether PM_{N-1} has good reception from the PL and its fPM, PM_{N-2}. If PM_{N-1} has a good reception state from the PL and PM_{N-2}, the Constant-Distance algorithm (e.g. Equation 1) will act stably and a constant distance can be maintained.

If PM_{N-1} does not have a good reception state from the PL and PM_{N-2} and the PL accelerates, assuming that PM_{N} does have good reception from both PL and PM_{N-1} there will be conflicting information at PM_{N} as the PL may indicate an acceleration value to PM_{N} but PM_{N-1} (due to missing the PM_{N-1} message) might still be cruising/braking. If PM_{N} averages both indications it will accelerate more than PM_{N-1} , and the safety distance might be underrun, causing unsafe Platooning.

Similar issues may occur for Constant Time Headway (CTH) algorithms. When determining acceleration for PM_{N}, a CTH algorithm uses information from the preceding car (fPM). CTH algorithms will suffer from outdated information from the fPM and therefore CTH algorithms may drive more conservatively when fPM indicates a poor radio state.

In examples, weights of algorithms such as the CD algorithm and the CTH algorithm are altered depending on the availability of information to a PM.

If PM_{N-1} does not have a good reception state from the PL and PM_{N-2} and the PL brakes, assuming that PM_{N} does have good reception from both PL and PM_{N-1} there will be conflicting information at PM_{N} as the PL may indicate braking (a deceleration value) to PM_{N} but PM_{N-1} message might be cruising/accelerating (due to missed reception). If PM_{N} brakes more than PM_{N-1} does, the IVD will start to increase between PM_{N} and PM_{N-1}, which will reduce Platoon efficiency.

In some examples, in order to provide safe and efficient Platooning, a PM may modify the coefficients used in the control algorithm for controlling the PM depending on the packet loss status of the wirelessly transmitted information in the Platoon. Using this method, control algorithms for a Platoon can act stably, safely and efficiently even when a PM does not have a good reception state from a PL, PM_{N-1} and PM_{N-2}.

In some examples, each PM indicates the information (for example, the PL message, the fPM message, age of the PL message, age of the fPM message) it has used to compute its target acceleration in a communication state message. As such, the PM indicates information showing the PM's access to received messages. The information may be indicated to a PL, one or more PMs, a controller of the Platoon or a PM behind the PM in the Platoon, for example.

In some examples, each PM indicates the weights assigned to the different messages in the controller of the PM. In some examples, the controller may be a CD controller. Some example embodiments can also be applied to other platoon control algorithms (e.g. a CTH algorithm) and to other cooperative manoeuvres, like line merging.

In some examples, a PM receiving wireless transmission information identifies missing radio information and modifies the control algorithm for computing its own instantaneous acceleration by choosing a weighting in the algorithm that puts a lower weight on the outdated value. The new weights can be chosen such that the computed acceleration changes gradually to avoid every single packet loss creating a sudden change in acceleration or direction of the vehicle. This avoids the vehicle experiencing a "jerk". The computed acceleration can be changed gradually, for example, by gradually lowering the weight of the missing value down to zero over a defined period of time (i.e. by fading out the weight of the missing value).

By changing weighting coefficients in view of availability of information, unexpected platooning behaviour, instability of IVD or even Platoon crashes can be avoided when information to be input into a control algorithm is missing. For example, when movement information of a PL or of a fPM is missing or outdated, the weighting coefficient C₁ in Equation 1 can be adapted to put less weighting on the outdated or missing information. The movement information may be missing due to successive data packet losses between entities in the Platoon. Such losses can have multiple triggering factors such as Radio Link Failure of the required information from another PM, decreased QoS at cell edges, persistent packet collisions due to SPS scheduling, hidden node issues, etc. Adaptive parameter settings of weighting coefficients applied in a control algorithm can account for these losses and prevent unexpected platooning behaviour and Platoon crashes.

In some examples, the weighting coefficients are applied according to the state of radio communication and the driving situation (for example, whether the PL and PM in front is accelerating or decelerating).

Changing weights in the computed acceleration gradually can also be used to account for the use of on-board sensors, which may take a period of time to detect changes. Changing computed acceleration gradually may also be used to take into account higher uncertainty margins for relative speed and acceleration when measured by sensors (for example, on-board sensors) or to take into account a malfunction of sensors.

A first PM may include the weights used in the control algorithm for the first PM in one or more control messages that the first PM sends to a following PM. In some examples, the first PM may, in the one or more control messages, also communicate an indication of how long a message has not been received from the PL or the fPM for the first PM.

In some examples, a PL or a platoon controller in the network can define, during the formation of a platoon, which weights are to be used in which situation. For each communication state in a set of states, the weighing coefficients can then be defined. Then it is only required in a communication state message to communicate an ordering number, or index, of the relevant state in the set to indicate the weighting coefficients used at the PM.

Such states may be defined by combinations of the following, for a PM:
- Lack of the message from PL;
- Lack of the message from preceding PM (fPM);
- Lack of messages from both the PL and the fPM;
- Lack of all messages (in a scenario where messages are broadcasted in the platoon and therefore messages from intermediate cars or following cars may be used);
- The preceding PM (fPM) is indicating that it has not received messages from the PL;
- The preceding PM (fPM) is indicating that it has not received messages from its preceding PM;
- PL is accelerating, and fPM is braking (in this scenario it can be useful to give more weight to the fPM);
- PL is braking, and preceding car is accelerating (in this scenario it can be useful to give more weight to the PL and start braking pre-emptively)

In some examples, also the state of the onboard sensors may be considered in the state. For example, if there is a malfunction or a lack of values from onboard sensors, this can lead to the application of different weights, similar to an application of different weights for a lack of received messages.

In some example embodiments, a Platoon Communication State message is used to indicate that state of wireless communications to the PL, PMs or a controlling entity of a Platoon. The Platoon Communication State message may indicate the experienced QoS /or Quality of Experience of a PM. The Platoon Communication State message may also include the abovementioned combinations of state information of a PM.

The table below (Table 1) shows an example for the use of the communication for selection of parameter from a predefined set. In some examples, the duration of packet losses may be used to gradually change the values between defined values of the set.

**[Table 1]**

| **PM_{N} reception state from PL** | **PM_{N} reception state PM_{N-1}** | **PL maneuver** | **Selection of C₁** |
|---|---|---|---|
| Positive | Positive | Acceleration or Brake | Weight set 1 (C₁=0.5) |
| Positive | Negative | Acceleration | Weight set 2 (C₁=0) |
| | | Brake | Weight set 3 (C₁=1) |
| Negative | Positive | Unknown | Weight set 2 (C₁=0) |
| Negative | Negative | Unknown | Weight set 4, use on-board radar reading of PM_{N-1} for distance and speed |

Additionally, a communication state message can also include information on the wireless technology used, for example when the Platoon changes the wireless access mechanism between Long Term Evolution (LTE), New Radio (NR) and 802.11p transmissions.

In some examples, the communication state message can be used to relay lost information. If PM3 has information that PL is braking, and at the same time PM2 has lost the braking command from the PL, PM3 can infer this situation when it receives conflicting messages from PL and PM2 or a communication status lacking PL input. It could then indicate to PM2 that it might need to brake.

The communication state message indicates whether the required movement information from the PL 101 and from the PM 103 directly in front is available to PM 105. If the required movement information is not available, the acceleration of platoon member 105 might be unstable for safe platooning as the algorithm might be operating with outdated values of the movement information of platoon leader 101 and platoon member 103. The message sent by platoon member 105 indicates the communication state that platoon member 105 has with the platoon leader 101 and the platoon member 103 directly in front.

Using the method described above, if a PM has computed its desired acceleration without one of the input messages (which for the example of Equation 1, would be either a PL of a fPM message) or purely based on on-board sensors, a notification can be be made available to the PMs behind the PM in the Platoon. In some examples, the notification can be made to all the other PMs in the Platoon. The notification may be included in a communication state message. The other PMs can also be notified, when the Platoon Member computing the acceleration has modified the weights assigned to different messages/sensors in the algorithm. This modification of weights in the algorithm may be indicated as a state or can be indicated quantitatively with the value of the weights. In some examples, the PL may specify a set of parameters during Platoon formation and a choice from the set can be communicated by PM in control messages, wherein the choice is made based on communication state and movement information of other PMs and the PL. If this information is made available to the PMs at the back of the Platoon, for example, these PMs could potentially resolve conflicts of messages and choose the same or suitable weights for their own control algorithms to make more intelligent decisions while deciding on their next manoeuvre. This can avoid crashes and unexpected Platooning behaviour.

In some examples, an adaption of IVD for a Platoon may be triggered based on a communication state message comprising a notification that a PM has computed its desired acceleration without an input message or by modifying a weight in a control algorithm of the PM. By adapting the IVD, for example by extending the IVD when input messages are missing, safer and more reliable Platooning can be provided.

Figure 1B shows an example of how a communication state message can be sent within a group of vehicles. In some examples, the group may comprise a platoon.

In Figure 1B, PM3 174 may be receiving wireless messages from PM2 186. In some examples, PM3 174 may also be receiving wireless messages from PL 170. PM3 174 may have limited reception of platoon messages.

At 184, PM3 174 may send a communication state message to PL 170. At 182, in some examples, PL 170 may forward the communication state message, or information derived from the communication state message, to the network 180. This information can be used at the network for QoS and application configuration. PL 170 may aggregate communication state messages that are received at PL 170.

At 186, PM3 174 may send a communication state message to PM2 172. This may relay reception of PL information, for example.

At 188, PM3 174 may send a communication state message to PM4 176. PM4 176 may use information in the communication state message to adjust the acceleration of PM4 176. PM4 176 may use information in the communication state message to adjust weighting coefficients used in a control algorithm for PM4 176. The message sent at 188 may comprise communication state information, or weighting coefficients used in at PM3 174.

At 190, PM4 176 may forward the communication state message from PM3 174 to a preceding (following) vehicle PMN 178 in the group. In some examples, PM4 176 could also send its own communication state message at 190. The message sent at 190 may comprise communication state information, or weighting coefficients used in at PM3 174.

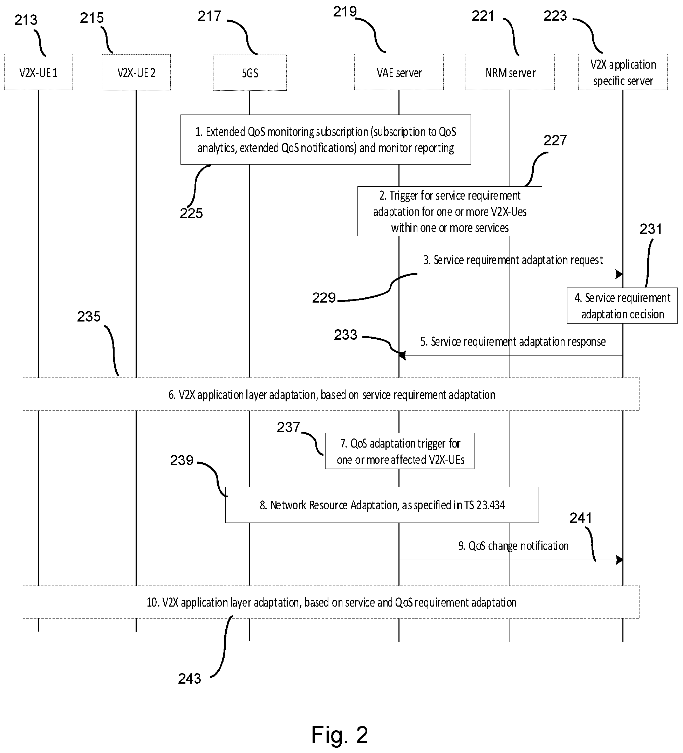

Figure 2 shows a signal flow chart for monitoring and controlling Quality of Service (QoS) for Enhanced vehicle-to-everything (eV2X) communication. A similar flow chart is discussed in 3rd Generation Partnership Project; Technical Specification Group Services and System Aspects; Study on enhancements to application layer support for V2X services (Release 17); 3GPP TR23.764 V0.5.0 (2020-02).

In the example of Figure 2, a system comprises a 5G system (5GS) 217, a Vehicle to Everything (V2X) server 223, a V2X Application Enabler Server (VAE) 223, a Network Resource Model (NRM) server 221, a V2X User Equipment (UE) 213 and a V2X UE 215. In some examples, there may be one or more V2X UEs.

At 225, VAE server 219, subscribes to QoS monitoring service from 5GS 217. The subscription may be active for a given geographical area or a certain period of time. The reporting may be configured for a given area, time, periodicity etc taking into account the service requirement and other parameters (e.g. expected congestion in certain area, time of the day, road conditions).

At 227, VAE server 219, based on the monitoring events for one or multiple V2X-UEs 213 and 215, may trigger a service requirement adaptation based on the actual or expected QoS change for one or more V2X services.

At 229, VAE server 219 sends a service requirement adaptation request to V2X application specific server 223. This request may identify the action which is needed, based on the actual or expected QoS change. This could be, for example, the adaptation of the Level of Automation (LoA) for one or more V2X-UEs 213 and 215 or V2X services.

At 231, V2X application specific server 223 decides whether to adapt the service requirement based on the request sent at 229, and sends a response at 233 to VAE server 219 with a positive or negative acknowledgment. In some examples, this may optionally include the list of a sub-set of V2X-UEs within a service for which the requirement change should be applied.

At 233, if no QoS adaptation is required, V2X application layer may adapt based on the adapted service requirements, and 237, 239, 241 and 243 are optional.

At 235, if a QoS adaptation is required, VAE server 219 triggers the adaptation of QoS for the affected V2X-UE(s) within the service or across multiple services in a close vicinity.

At 237, VAE server 219 triggers network resource adaptation. At 239, VAE server 219 interacts with the NRM server 221 and 5GS 217 in 239. Such a network resource adaptation is discussed in 3GPP TS 23.434 "Service Enabler Architecture Layer for Verticals (SEAL); Functional architecture and information flows" 24 December 2019 (Release 16), for example. A network resource adpation may comprise an QoS modification.

At 241 the VAE notifies the V2x application layer of the QoS modification. In 243, the V2x application server 223 adapts based on the adapted service and QoS requirements.

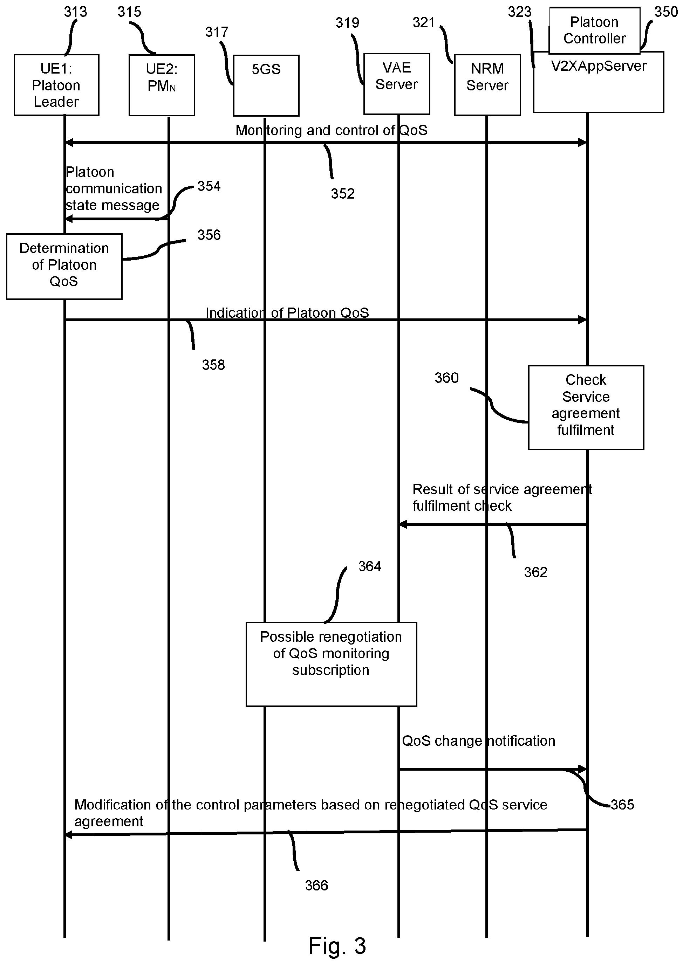

In some examples, the communication state messages discussed above can also be used to renegotiate a QoS agreement with V2XAppServer 223 and/or 5GS 217, leading to coordinated implementation of the V2XAppServer and the UE application. In these examples, the communication state message could provide feedback from the UE application and this feedback could be used in reaching service agreements between the 5GS 217, NRM server 221, VAE server 219 and V2X application specific server 233. This process is explained below in relation to Figure 3.

In the example of Figure 3, a system comprises 5GS 317, VAE server 319, NRM server 321 and V2X application specific server 323. V2X application specific server 323 may be connected to, or in some examples may comprise, a platoon controller for PL 313 and PM_{N} 315. In the example of Figure 2, the UEs are positioned at a PL and one or more PMs such that a first UE comprises PL 313 and a second UE comprises PM_{N} 315.

At 352, QoS monitoring and controlling for a Platoon comprising PL 313 and PM_{N} 315 is set up similar to 225 to 243 shown in Figure 2.

At 354, PM_{N} 315 sends a platoon communication state message to PL 313. PL 313 can then determine at 356 the QoS (Quality of Experience of Platoon application) experienced by the Platoon based on this communication state message. In some examples, PL 313 may determine the QoS experienced by the platoon based on more than one communication state message. In some examples, the more than one communication state message may be received from a combination of Platoon members or from only one Platoon Member. The information sent at 354 may be aggregated at PL 313 prior to or during 356. The determination of Platoon QoS at 356 may, in some examples, be determined by an algorithm.

At 358, the information determined at 356 can then be sent to V2XAppServer 323. At 360, V2XAppServer 323 verifies whether the currently negotiated Service agreement with the network is fulfilled at the Platoon. This can be particularly useful when the Platoon messages are transmitted on Sidelink transmissions, where the network cannot fully monitor the required QoS due to lack of feedback from Sidelink receivers. For example, on the NR Sidelink, resources for message transmission can be granted by the network, but there may not be any feedback from the Sidelink receiver to the Network. In this case, even though the resources are granted and monitored, the network may not be aware of the QoS available to the concerned Sidelink UEs. Example embodiments overcome this by sending the communication state message at 354.

The network may include at least one of 5GS 317, V2XAppServer 323 and VAE Server 319. A network agreement may not be fulfilled when a certain QoS of transmissions is agreed and the QoS of transmission drops below that level. This may happen, for example, when PMs have been granted sidelink resources (e.g. exclusive mode 1), but experience interference and cannot decode messages and as such the required and negotiated QoS is not fulfilled.

At 362, the results of the verification at 360 are signalled to VAE server 319. The results can be used to trigger a trigger to renegotiate a new service agreement between VAE server 319, the NRM server 321 and 5GS 317 at 364. A more reliable service agreement from the network can then be agreed when the Platoon suffers from QoS degradation.

In some examples, the notification to V2XAppServer 323 sent at 352 can be from PL 313 or directly from any Platoon Member via Uu and/or Sidelink mechanisms.

At 365, 5GS 317, NRM server 321 or VAE server 319 make the V2XAppServer 323/Platoon Controller 350 aware of the renegotiated QoS and may trigger a modification of the platoon control algorithm at 366. This is similar to 241 in Figure 2.

At 366, the modification of the Platoon control parameters or the application adaptation information based on the renegotiated QoS service agreement is provided to the Platoon. In some examples, the modified control parameters are signalled to the PL 313.

In some examples, Platoon controller 350 is handled in a coordinated manner between V2XAppServer 323 and PL 313. In some examples, the short-term (up to seconds) control parameters of the Platooning application can be handled by PL 313 based on the instantaneous network QoS. The long-term (in minutes) adaptation of the Platoon adaptation could be handled by the Platoon application hosted in the V2XAppServer 323, for example providing the parameters of the platoon control algorithm (e.g. the weights of input from PL and from fPM) and/or the allowed range of target inter-vehicle distances based on the service agreement with 5GS 317. As such, coordination between the end users and the application server (V2XAppServer 323) is established.

In some examples, PL 313 could use the Platoon communication status messages to renegotiate with an access network the Resource Allocation (e.g. during 364) for Sidelink Platoon transmissions. For example, a new Semi-persistent scheduling (SPS) allocation could be requested for a single Platoon Member-Platoon Member link which suffers from persistent interference. By using the method described above, a communication state message can be used to renegotiate service agreements based on the performance of wireless messages sent between members of a Platoon.

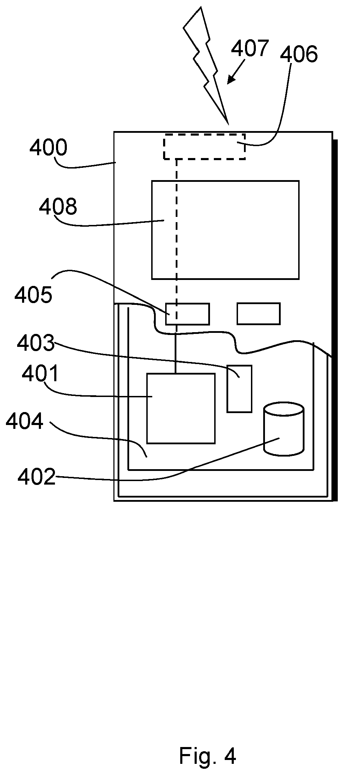

A possible wireless communication device will now be described in more detail with reference to Figure 4 showing a schematic, partially sectioned view of a communication device 400. Such a communication device is often referred to as user equipment (UE) or terminal. A PL or PM may incorporate such a communication device. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia, machine-type communication for Internet of Thing (IoT) and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information, sensor data and remote control.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 400 may receive signals over an air or radio interface 407 via appropriate apparatus for receiving and may transmit signals via appropriate apparatus for transmitting radio signals. In Figure 4 transceiver apparatus is designated schematically by block 406. The transceiver apparatus 406 may be provided for example by means of a radio part and associated antenna arrangement. The antenna arrangement may be arranged internally or externally to the wireless device.

A wireless device is typically provided with at least one data processing entity 401, at least one memory 402 and other possible components 403 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 404. The user may control the operation of the wireless device by means of a suitable user interface such as key pad 405, voice commands, touch sensitive screen or pad, combinations thereof or the like. A display 408, a speaker and a microphone can be also provided. Furthermore, a wireless communication device may comprise appropriate connectors (either wired or wireless) to other devices and/or for connecting external accessories, for example hands-free equipment, thereto. The communication devices 402, 404, 405 may access the communication system based on various access techniques.

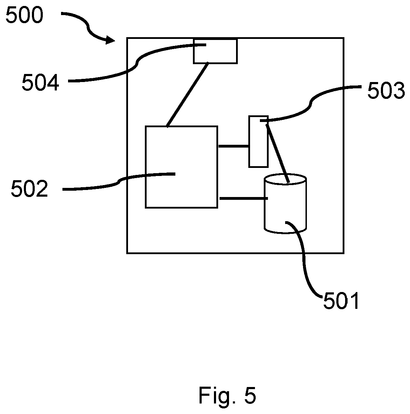

Figure 5 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, or an IAB or relay node. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 500 can be arranged to provide control on communications in the service area of the system. The control apparatus 500 comprises at least one memory 501, at least one data processing unit 502, 503 and an input/output interface 504. Via the interface the control apparatus can be coupled to a receiver and a transmitter of the base station. The receiver and/or the transmitter may be implemented as a radio front end or a remote radio head. For example, the control apparatus 500 or processor 501 can be configured to execute an appropriate software code to provide the control functions.

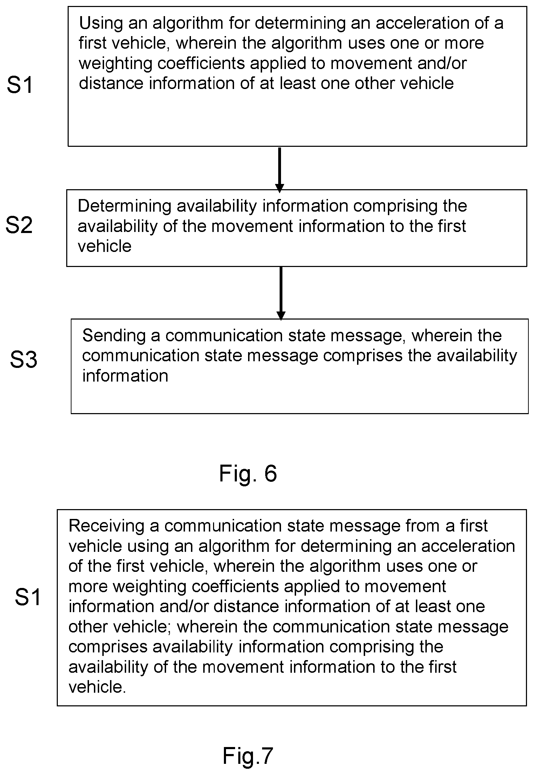

Figure 6 is a flow chart of a method according to an example. The flow chart of Figure 6 is viewed from the perspective of an apparatus such as a first vehicle. In some examples the first vehicle may be a Platoon Member, for examples PM3 174.

At S1, the method comprises using an algorithm for determining an acceleration of a first vehicle, wherein the algorithm uses one or more weighting coefficients applied to movement and/or distance information of at least one other vehicle.

At S2, the method comprises determining availability information comprising the availability of the movement information to the first vehicle.

At S3, the method comprises sending a communication state message, wherein the communication state message comprises the availability information.

Figure 7 is a flow chart of a method according to an example. The flow chart of Figure 7 is viewed from the perspective of an apparatus such as PL 170, PM2 172, PM4 176, PMN 178 or a network entity 180.

At S1, the method comprises receiving a communication state message from a first vehicle using an algorithm for determining an acceleration of the first vehicle, wherein the algorithm uses one or more weighting coefficients applied to movement information and/or distance information of at least one other vehicle. The communication state message comprises availability information comprising the availability of the movement information to the first vehicle.

It will be understood that the described steps of the methods above are not necessarily purely sequential, according to some examples.

In general, the various embodiments may be implemented in hardware or special purpose circuits, software, logic or any combination thereof. Some example embodiments may be implemented in hardware, while other aspects may be implemented in firmware or software which may be executed by a controller, microprocessor or other computing device, although not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following: (a) hardware-only circuit implementations (such as implementations in only analog and/or digital circuitry) and(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

The example embodiments may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Although the invention has been explained in relation to its preferred embodiment(s) as mentioned above, it is to be understood that many other possible modifications and variations can be made without departing from the scope of the present invention, which is defined by the claims.

## Claims

1. An apparatus (500) comprising means for performing:
using (S1) an algorithm for determining an acceleration of a first vehicle of vehicles travelling in a group, wherein the algorithm uses one or more weighting coefficients applied to movement information and/or distance information of at least one other vehicle of the vehicles;
determining (S2) availability information comprising availability of the movement information to the first vehicle; and
sending (S3) a communication state message, wherein the communication state message comprises the availability information,
wherein, in using (S1) the algorithm, less weighting is used for a vehicle when corresponding movement information and/or distance information is outdated.

2. The apparatus (500) according to claim 1, wherein the communication state message indicates the one or more weighting coefficients applied to the movement information.

3. The apparatus (500) according to any preceding claim, wherein the movement information of the least one other vehicle comprises an acceleration, speed or position of the at least one other vehicle.

4. The apparatus (500) according to any preceding claim, wherein the means are further for performing: receiving the movement information of the at least one other vehicle via a wireless transmission sent by the at least one other vehicle.

5. The apparatus (500) according to any preceding claim, wherein the at least one other vehicle comprises: a second vehicle; a third vehicle positioned in front of the first vehicle; and a following vehicle positioned behind the first vehicle.

6. The apparatus (500) according to claim 5, wherein the communication state message is used to indicate at least one of the following states:
the first vehicle has not received, in a first predetermined period of time, a message from the second vehicle indicating the movement information of the second vehicle;
the first vehicle has not received, in a second predetermined period of time, a message from the third vehicle indicating the movement information of the third vehicle;
the first vehicle has not received, in a third predetermined period of time, a message from the second vehicle indicating the movement information of the second vehicle or a message from the third vehicle indicating the movement information of the third vehicle;
the first vehicle has not received, in a fourth predetermined period of time, a message indicating movement information from the any of the vehicles in the group; and
a malfunction of one or more on-board sensors or a lack of values received in a fifth predetermined period of time from the one or more on-board sensors of the first vehicle.

7. The apparatus (500) according to claim 5 or claim 6, wherein the communication state message is used to indicate at least one of the following states:
the third vehicle has indicated to the first vehicle that the third vehicle has not received a message from the second vehicle in a sixth predetermined period of time;
the third vehicle has indicated to the first vehicle that the third vehicle has not received a message from a vehicle of the vehicles which is positioned in front of the third vehicle in a seventh predetermined period of time; and
the third vehicle has indicated to the first vehicle that the third vehicle has a malfunction of one or more on-board sensors or a lack of values received in a fifth predetermined period of time from the one or more on-board sensors of the third vehicle.

8. The apparatus (500) according to any of claim 5 to 7, wherein the communication state message is used to indicate at least one of the following states:
the second vehicle is accelerating and the third vehicle is braking; and
the second vehicle is braking and the third vehicle is accelerating.

9. The apparatus (500) according to any of claims 5 to 8, and the means are further for performing:
adapting the one or more weighting coefficients to apply a first weighting to movement information from the second vehicle and to movement information from the third vehicle when messages indicating the movement information of both the second vehicle and the third vehicle are available;
adapting the one or more weighting coefficients to apply a second weighting to movement information from the second vehicle when messages indicating the movement information of the second vehicle are not available and messages indicating the movement of the third vehicle are available;
adapting the one or more weighting coefficients to apply a third weighting to movement information from the second vehicle when messages indicating the movement information of the second vehicle are available and messages indicating the movement of the third vehicle are not available and the movement information of the second vehicle indicates that the second vehicle is accelerating;
adapting the one or more weighting coefficients to apply a fourth weighting to movement information from the second vehicle when messages indicating the movement information of the second vehicle are available and messages indicating the movement of the third vehicle are not available and the movement information of the second vehicle indicates that the second vehicle is braking; and
adapting the algorithm for computing the acceleration of the first vehicle to use an on-board sensor to determine the distance and speed of the third vehicle when no messages are available indicating the movement information of preceding vehicles.

10. The apparatus (500) according to any of claims 5 to 9, wherein the means are further for performing:
sending, when messages indicating the movement information of the second vehicle are available and messages indicating the movement information of the third vehicle is not available, an indication to the third vehicle with the movement information of the second vehicle.

11. The apparatus (500) according to any of claims 5 to 10, wherein sending the communication state message comprises sending the communication state message to at least one of: the second vehicle; the third vehicle; one or more of the vehicles travelling in the group; and a controlling entity of the vehicles travelling in the group inside one of the vehicles of the group or in a network.

12. The apparatus according to any of claims 5 to 11, where the means are further for performing:
sending information about the applied weights of the algorithm to the following vehicle together, with, or instead of, the communication state message.

13. The apparatus (500) according to any of claims 5 to 12, where the weights that are to be applied for the communication states are preconfigured and/or negotiated between the vehicles or received from an application server.

14. The apparatus (500) according to any of claims 5 to 13, wherein sending the communication state message comprises sending the communication state message to the second vehicle, wherein the second vehicle can determine Quality of Service information for the first vehicle from the communication state message and send the Quality of Service information to a server, wherein the server modifies control parameters of the vehicles travelling in the group comprising the first vehicle based on the Quality of Service information.

15. The apparatus (500) according to any of claims 5 to 14, wherein:
the group is a Platoon;
the first vehicle is a member of the Platoon;
the second vehicle is a Platoon Leader of the Platoon;
the third vehicle is a preceding Platoon member to the first vehicle such that the third vehicle is the vehicle which is next in front of the first vehicle in the Platoon.

## Patentansprüche

1. Vorrichtung (500), umfassend Mittel zum Ausführen von:
Verwenden (S1) eines Algorithmus zum Bestimmen einer Beschleunigung eines ersten Fahrzeugs von Fahrzeugen, die in einer Gruppe fahren, wobei der Algorithmus einen oder mehrere Gewichtungskoeffizienten verwendet, die auf Bewegungsinformationen und/oder Entfernungsinformationen mindestens eines anderen Fahrzeugs der Fahrzeuge angewendet werden;
Bestimmen (S2) von Verfügbarkeitsinformationen, umfassend die Verfügbarkeit der Bewegungsinformationen für das erste Fahrzeug; und
Senden (S3) einer Kommunikationszustandsnachricht, wobei die Kommunikationszustandsnachricht die Verfügbarkeitsinformationen umfasst,
wobei bei der Verwendung (S1) des Algorithmus eine geringere Gewichtung für ein Fahrzeug verwendet wird, wenn entsprechende Bewegungsinformationen und/oder Entfernungsinformationen veraltet sind.

2. Vorrichtung (500) nach Anspruch 1, wobei die Kommunikationszustandsnachricht den einen oder die mehreren Gewichtungskoeffizienten angibt, die auf die Bewegungsinformationen angewendet werden.

3. Vorrichtung (500) nach einem der vorhergehenden Ansprüche, wobei die Bewegungsinformationen des mindestens einen anderen Fahrzeugs eine Beschleunigung, eine Geschwindigkeit oder eine Position des mindestens einen anderen Fahrzeugs umfassen.

4. Vorrichtung (500) nach einem der vorhergehenden Ansprüche, wobei die Mittel ferner zum Ausführen des Folgenden dienen: Empfangen der Bewegungsinformationen des mindestens einen anderen Fahrzeugs über eine drahtlose Übertragung, die von dem mindestens einen anderen Fahrzeug gesendet wird.

5. Vorrichtung (500) nach einem der vorhergehenden Ansprüche, wobei das mindestens eine andere Fahrzeug umfasst: ein zweites Fahrzeug; ein drittes Fahrzeug, das vor dem ersten Fahrzeug positioniert ist; und ein nachfolgendes Fahrzeug, das hinter dem ersten Fahrzeug positioniert ist.

6. Vorrichtung (500) nach Anspruch 5, wobei die Kommunikationszustandsnachricht verwendet wird, um mindestens einen der folgenden Zustände anzuzeigen:
das erste Fahrzeug hat in einer ersten vorbestimmten Zeitspanne keine Nachricht von dem zweiten Fahrzeug empfangen, die die Bewegungsinformationen des zweiten Fahrzeugs angibt;
das erste Fahrzeug hat in einer zweiten vorbestimmten Zeitspanne keine Nachricht von dem dritten Fahrzeug empfangen, die die Bewegungsinformationen des dritten Fahrzeugs angibt;
das erste Fahrzeug hat in einer dritten vorbestimmten Zeitspanne keine Nachricht von dem zweiten Fahrzeug, die die Bewegungsinformationen des zweiten Fahrzeugs angibt, oder keine Nachricht von dem dritten Fahrzeug empfangen, die die Bewegungsinformationen des dritten Fahrzeugs angibt;
das erste Fahrzeug hat in einer vierten vorbestimmten Zeitspanne keine Nachricht empfangen, die Bewegungsinformationen von einem beliebigen der Fahrzeuge in der Gruppe angibt; und
eine Fehlfunktion eines oder mehrerer Bordsensoren oder ein Ausbleiben von in einer fünften vorbestimmten Zeitspanne empfangenen Werten von dem einen oder den mehreren Bordsensoren des ersten Fahrzeugs.

7. Vorrichtung (500) nach Anspruch 5 oder Anspruch 6, wobei die Kommunikationszustandsnachricht verwendet wird, um mindestens einen der folgenden Zustände anzuzeigen:
das dritte Fahrzeug hat dem ersten Fahrzeug angezeigt, dass das dritte Fahrzeug in einer sechsten vorbestimmten Zeitspanne keine Nachricht von dem zweiten Fahrzeug empfangen hat;
das dritte Fahrzeug hat dem ersten Fahrzeug angezeigt, dass das dritte Fahrzeug in einer siebten vorbestimmten Zeitspanne keine Nachricht von einem Fahrzeug der Fahrzeuge empfangen hat, das vor dem dritten Fahrzeug positioniert ist; und
das dritte Fahrzeug hat dem ersten Fahrzeug angezeigt, dass das dritte Fahrzeug eine Fehlfunktion eines oder mehrerer Bordsensoren oder ein Ausbleiben von in einer fünften vorbestimmten Zeitspanne empfangenen Werten von dem einen oder den mehreren Bordsensoren des dritten Fahrzeugs aufweist.

8. Vorrichtung (500) nach einem der Ansprüche 5 bis 7, wobei die Kommunikationszustandsnachricht verwendet wird, um mindestens einen der folgenden Zustände anzuzeigen:
das zweite Fahrzeug beschleunigt und das dritte Fahrzeug bremst; und
das zweite Fahrzeug bremst und das dritte Fahrzeug beschleunigt.

9. Vorrichtung (500) nach einem der Ansprüche 5 bis 8, und die Mittel ferner zum Ausführen des Folgenden dienen:
Anpassen des einen oder der mehreren Gewichtungskoeffizienten, um eine erste Gewichtung auf Bewegungsinformationen von dem zweiten Fahrzeug und auf Bewegungsinformationen von dem dritten Fahrzeug anzuwenden, wenn Nachrichten, die die Bewegungsinformationen sowohl des zweiten Fahrzeugs als auch des dritten Fahrzeugs angeben, verfügbar sind;
Anpassen des einen oder der mehreren Gewichtungskoeffizienten, um eine zweite Gewichtung auf Bewegungsinformationen von dem zweiten Fahrzeug anzuwenden, wenn Nachrichten, die die Bewegungsinformationen des zweiten Fahrzeugs angeben, nicht verfügbar sind und Nachrichten, die die Bewegung des dritten Fahrzeugs angeben, verfügbar sind;
Anpassen des einen oder der mehreren Gewichtungskoeffizienten, um eine dritte Gewichtung auf Bewegungsinformationen von dem zweiten Fahrzeug anzuwenden, wenn Nachrichten, die die Bewegungsinformationen des zweiten Fahrzeugs angeben, verfügbar sind und Nachrichten, die die Bewegung des dritten Fahrzeugs angeben, nicht verfügbar sind und die Bewegungsinformationen des zweiten Fahrzeugs angeben, dass das zweite Fahrzeug beschleunigt;
Anpassen des einen oder der mehreren Gewichtungskoeffizienten, um eine vierte Gewichtung auf Bewegungsinformationen von dem zweiten Fahrzeug anzuwenden, wenn Nachrichten, die die Bewegungsinformationen des zweiten Fahrzeugs angeben, verfügbar sind und Nachrichten, die die Bewegung des dritten Fahrzeugs angeben, nicht verfügbar sind und die Bewegungsinformationen des zweiten Fahrzeugs angeben, dass das zweite Fahrzeug bremst; und
Anpassen des Algorithmus zum Berechnen der Beschleunigung des ersten Fahrzeugs, um einen Bordsensor zu verwenden, um die Entfernung und Geschwindigkeit des dritten Fahrzeugs zu bestimmen, wenn keine Nachrichten verfügbar sind, die die Bewegungsinformationen vorausfahrender Fahrzeuge angeben.

10. Vorrichtung (500) nach einem der Ansprüche 5 bis 9, wobei die Mittel ferner zum Ausführen des Folgenden dienen:
Senden, wenn Nachrichten, die die Bewegungsinformationen des zweiten Fahrzeugs angeben, verfügbar sind und Nachrichten, die die Bewegungsinformationen des dritten Fahrzeugs angeben, nicht verfügbar sind, einer Angabe an das dritte Fahrzeug mit den Bewegungsinformationen des zweiten Fahrzeugs.

11. Vorrichtung (500) nach einem der Ansprüche 5 bis 10, wobei das Senden der Kommunikationszustandsnachricht das Senden der Kommunikationszustandsnachricht an mindestens eines der Folgenden umfasst: das zweite Fahrzeug; das dritte Fahrzeug; eines oder mehrere der Fahrzeuge, die in der Gruppe fahren; und eine steuernde Einheit der Fahrzeuge, die in der Gruppe fahren, innerhalb eines der Fahrzeuge der Gruppe oder in einem Netzwerk.

12. Vorrichtung nach einem der Ansprüche 5 bis 11, wobei die Mittel ferner zum Ausführen des Folgenden dienen:
Senden von Informationen über die angewendeten Gewichte des Algorithmus an das nachfolgende Fahrzeug zusammen mit oder anstelle der Kommunikationszustandsnachricht.

13. Vorrichtung (500) nach einem der Ansprüche 5 bis 12, wobei die Gewichte, die für die Kommunikationszustände anzuwenden sind, vorkonfiguriert und/oder zwischen den Fahrzeugen ausgehandelt oder von einem Anwendungsserver empfangen werden.

14. Vorrichtung (500) nach einem der Ansprüche 5 bis 13, wobei das Senden der Kommunikationszustandsnachricht das Senden der Kommunikationszustandsnachricht an das zweite Fahrzeug umfasst, wobei das zweite Fahrzeug Dienstgüte-Informationen für das erste Fahrzeug aus der Kommunikationszustandsnachricht bestimmen und die Dienstgüte-Informationen an einen Server senden kann, wobei der Server Steuerungsparameter der Fahrzeuge, die in der Gruppe fahren, die das erste Fahrzeug umfasst, auf der Grundlage der Dienstgüte-Informationen modifiziert.

15. Vorrichtung (500) nach einem der Ansprüche 5 bis 14, wobei:
die Gruppe eine Kolonne ist;
das erste Fahrzeug ein Mitglied der Kolonne ist;
das zweite Fahrzeug ein Kolonnenführer der Kolonne ist;
das dritte Fahrzeug ein vorausfahrendes Kolonnenmitglied gegenüber dem ersten Fahrzeug ist, so dass das dritte Fahrzeug das Fahrzeug ist, das in der Kolonne unmittelbar vor dem ersten Fahrzeug fährt.

## Revendications

1. Appareil (500) comprenant des moyens pour exécuter :
l'utilisation (S1) d'un algorithme pour déterminer une accélération d'un premier véhicule de véhicules se déplaçant en groupe, dans lequel l'algorithme utilise un ou plusieurs coefficients de pondération appliqués à des informations de mouvement et/ou des informations de distance d'au moins un autre véhicule des véhicules ;
la détermination (S2) d'informations de disponibilité comprenant la disponibilité des informations de mouvement vers le premier véhicule ; et
l'envoi (S3) d'un message d'état de communication, dans lequel le message d'état de communication comprend les informations de disponibilité,
dans lequel, lors de l'utilisation (S1) de l'algorithme, une pondération moindre est utilisée pour un véhicule lorsque les informations de mouvement et/ou les informations de distance correspondantes sont périmées.

2. Appareil (500) selon la revendication 1, dans lequel le message d'état de communication indique le ou les coefficients de pondération appliqués aux informations de mouvement.

3. Appareil (500) selon l'une quelconque des revendications précédentes, dans lequel les informations de mouvement de l'au moins un autre véhicule comprennent une accélération, une vitesse ou une position de l'au moins un autre véhicule.

4. Appareil (500) selon l'une quelconque des revendications précédentes, dans lequel les moyens sont en outre destinés à exécuter : la réception des informations de mouvement de l'au moins un autre véhicule via une transmission sans fil envoyée par l'au moins un autre véhicule.

5. Appareil (500) selon l'une quelconque des revendications précédentes, dans lequel l'au moins un autre véhicule comprend : un deuxième véhicule ; un troisième véhicule positionné devant le premier véhicule ; et un véhicule suiveur positionné derrière le premier véhicule.

6. Appareil (500) selon la revendication 5, dans lequel le message d'état de communication est utilisé pour indiquer au moins l'un des états suivants :
le premier véhicule n'a pas reçu, dans une première période de temps prédéterminée, un message du deuxième véhicule indiquant les informations de mouvement du deuxième véhicule ;
le premier véhicule n'a pas reçu, dans une deuxième période de temps prédéterminée, un message du troisième véhicule indiquant les informations de mouvement du troisième véhicule ;
le premier véhicule n'a pas reçu, dans une troisième période de temps prédéterminée, un message du deuxième véhicule indiquant les informations de mouvement du deuxième véhicule ou un message du troisième véhicule indiquant les informations de mouvement du troisième véhicule ;
le premier véhicule n'a pas reçu, dans une quatrième période de temps prédéterminée, un message indiquant des informations de mouvement de l'un quelconque des véhicules du groupe ; et
un dysfonctionnement d'un ou plusieurs capteurs embarqués ou une absence de valeurs reçues dans une cinquième période de temps prédéterminée provenant du ou des capteurs embarqués du premier véhicule.

7. Appareil (500) selon la revendication 5 ou la revendication 6, dans lequel le message d'état de communication est utilisé pour indiquer au moins l'un des états suivants :
le troisième véhicule a indiqué au premier véhicule que le troisième véhicule n'a pas reçu un message du deuxième véhicule dans une sixième période de temps prédéterminée ;
le troisième véhicule a indiqué au premier véhicule que le troisième véhicule n'a pas reçu un message d'un véhicule des véhicules qui est positionné devant le troisième véhicule dans une septième période de temps prédéterminée ; et
le troisième véhicule a indiqué au premier véhicule que le troisième véhicule présente un dysfonctionnement d'un ou plusieurs capteurs embarqués ou une absence de valeurs reçues dans une cinquième période de temps prédéterminée provenant du ou des capteurs embarqués du troisième véhicule.

8. Appareil (500) selon l'une quelconque des revendications 5 à 7, dans lequel le message d'état de communication est utilisé pour indiquer au moins l'un des états suivants :
le deuxième véhicule accélère et le troisième véhicule freine ; et
le deuxième véhicule freine et le troisième véhicule accélère.

9. Appareil (500) selon l'une quelconque des revendications 5 à 8, et les moyens sont en outre destinés à exécuter :
l'adaptation du ou des coefficients de pondération pour appliquer une première pondération aux informations de mouvement du deuxième véhicule et aux informations de mouvement du troisième véhicule lorsque des messages indiquant les informations de mouvement à la fois du deuxième véhicule et du troisième véhicule sont disponibles ;
l'adaptation du ou des coefficients de pondération pour appliquer une deuxième pondération aux informations de mouvement du deuxième véhicule lorsque des messages indiquant les informations de mouvement du deuxième véhicule ne sont pas disponibles et que des messages indiquant le mouvement du troisième véhicule sont disponibles ;
l'adaptation du ou des coefficients de pondération pour appliquer une troisième pondération aux informations de mouvement du deuxième véhicule lorsque des messages indiquant les informations de mouvement du deuxième véhicule sont disponibles et que des messages indiquant le mouvement du troisième véhicule ne sont pas disponibles et que les informations de mouvement du deuxième véhicule indiquent que le deuxième véhicule accélère ;
l'adaptation du ou des coefficients de pondération pour appliquer une quatrième pondération aux informations de mouvement du deuxième véhicule lorsque des messages indiquant les informations de mouvement du deuxième véhicule sont disponibles et que des messages indiquant le mouvement du troisième véhicule ne sont pas disponibles et que les informations de mouvement du deuxième véhicule indiquent que le deuxième véhicule freine ; et
l'adaptation de l'algorithme pour le calcul de l'accélération du premier véhicule pour utiliser un capteur embarqué afin de déterminer la distance et la vitesse du troisième véhicule lorsqu'aucun message n'est disponible indiquant les informations de mouvement de véhicules précédents.

10. Appareil (500) selon l'une quelconque des revendications 5 à 9, dans lequel les moyens sont en outre destinés à exécuter :
l'envoi, lorsque des messages indiquant les informations de mouvement du deuxième véhicule sont disponibles et que des messages indiquant les informations de mouvement du troisième véhicule ne sont pas disponibles, d'une indication au troisième véhicule avec les informations de mouvement du deuxième véhicule.

11. Appareil (500) selon l'une quelconque des revendications 5 à 10, dans lequel l'envoi du message d'état de communication comprend l'envoi du message d'état de communication à au moins l'un des éléments suivants : le deuxième véhicule ; le troisième véhicule ; un ou plusieurs des véhicules se déplaçant dans le groupe ; et une entité de commande des véhicules se déplaçant dans le groupe à l'intérieur de l'un des véhicules du groupe ou dans un réseau.

12. Appareil selon l'une quelconque des revendications 5 à 11, dans lequel les moyens sont en outre destinés à exécuter :
l'envoi d'informations concernant les poids appliqués de l'algorithme au véhicule suiveur conjointement avec, ou à la place de, le message d'état de communication.

13. Appareil (500) selon l'une quelconque des revendications 5 à 12, dans lequel les poids devant être appliqués pour les états de communication sont préconfigurés et/ou négociés entre les véhicules ou reçus d'un serveur d'application.

14. Appareil (500) selon l'une quelconque des revendications 5 à 13, dans lequel l'envoi du message d'état de communication comprend l'envoi du message d'état de communication au deuxième véhicule, dans lequel le deuxième véhicule peut déterminer des informations de qualité de service pour le premier véhicule à partir du message d'état de communication et envoyer les informations de qualité de service à un serveur, dans lequel le serveur modifie des paramètres de commande des véhicules se déplaçant dans le groupe comprenant le premier véhicule sur la base des informations de qualité de service.

15. Appareil (500) selon l'une quelconque des revendications 5 à 14, dans lequel :
le groupe est un peloton ;
le premier véhicule est un membre du peloton ;
le deuxième véhicule est un chef de peloton du peloton ;
le troisième véhicule est un membre de peloton précédant le premier véhicule de telle sorte que le troisième véhicule est le véhicule qui se trouve juste devant le premier véhicule dans le peloton.
